# DEMANDE DE BREVET EUROPEEN

(11) **EP 4 385 335 A1**
(43) Date de publication de la demande: **19.06.2024**
(21) Numéro de dépôt: 23216003.6
(22) Date de dépôt: 12.12.2023
(51) Int. Cl.: A23G 9/28, B67D 1/08, B67D 1/10

(54) **APPAREIL POUR CONSERVER ET DISTRIBUER UN PRODUIT ALIMENTAIRE ET UN RÉSERVOIR DE PRODUIT ALIMENTAIRE**

(30) Priorité: 15.12.2022 BE 202206021
(71) Demandeur: Yogurt Kitchen, 1390 Grez-Doiceau (BE)
(72) Inventeur: VRANCKEN, Ernest Johannes Leonardus Maria, 1170 Watermael-Boitsfort (BE); VALSCHAERTS, Jean-Benoît Henri Antoine, 1000 Bruxelles (BE)
(74) Mandataire: Gevers Patents

(57) **Abrégé**

L'invention concerne un appareil (1) pour conserver et distribuer à la demande un produit alimentaire liquide ou pâteux, en particulier du yaourt, comprenant : une enceinte (2) de stockage de manière amovible d'un réservoir contenant le produit alimentaire ; une unité de refroidissement (5) de l'enceinte (2) ; et une unité de soutirage (6) du produit alimentaire. L'appareil est configuré en ce qu'il comprend une porte (7) de fermeture de l'enceinte (2). L'invention se rapporte aussi à un réservoir de produit alimentaire et un ensemble comprenant l'appareil et le réservoir.

## Description

### Domaine technique

La présente invention concerne un appareil pour conserver et distribuer un produit alimentaire et un réservoir de produit alimentaire. L'invention concerne aussi un ensemble comprenant l'appareil et le réservoir.

### Art antérieur

Il existe des dispositifs pour la distribution de produits réfrigérés.

L'inconvénient de ces dispositifs est que la perte de froid est importante et que la chaîne du froid pour le maintien du produit en conditions réfrigérées n'est pas correctement respectée.

Il y a dès lors un besoin pour un dispositif permettant de conserver un produit alimentaire tout en permettant de le distribuer à la demande et de manière simple.

### Exposé de l'invention

À cet effet, l'invention propose un appareil pour conserver et distribuer à la demande un produit alimentaire liquide ou pâteux, l'appareil comprenant :
- une enceinte de stockage de manière amovible d'un réservoir contenant le produit alimentaire ;
- une unité de refroidissement de l'enceinte ;
- une unité de soutirage du produit alimentaire ;
et étant configuré en ce qu'il comprend une porte de fermeture de l'enceinte.

Dans une version, l'appareil comprend un bac amovible pour la réception de manière amovible du réservoir, le bac maintenant le réservoir dans l'enceinte.

Dans une version, le bac comprend des pans et une ouverture supérieure d'introduction d'un réservoir de produit alimentaire, le bac comprenant en outre des encoches dans les pans latéraux autour de l'ouverture supérieure, les encoches maintenant le réservoir dans le bac par pincement.

Dans une version, le bac comprend une base d'où s'étendent les pans, et une fente s'étendant le long d'un pan, depuis le bord du pan entourant l'ouverture d'introduction d'un réservoir jusqu'à la base, la fente fendant partiellement la base, la fente étant de préférence sur un pan avant du bac.

Dans une version, une surface interne délimitant l'enceinte comprend au moins un canal de circulation d'air refroidi depuis l'unité de refroidissement, le canal étant agencé le long de la surface interne de l'appareil, le canal étant de préférence un renfoncement dans la surface interne, de préférence une rainure dont une face concave est orientée vers un intérieur de l'enceinte.

Dans une version, un jeu entre le bac et les surfaces internes délimitant l'enceinte est plus important au droit de l'au moins un canal que un jeu entre le bac et les surfaces internes dans le reste de l'enceinte.

Dans une version, l'appareil comprend un passage pour un conduit de distribution du produit alimentaire, le passage étant depuis l'enceinte jusqu'à l'extérieur de l'appareil.

Dans une version, l'appareil comprend un élément de guidage attaché à la porte et un autre élément de guidage attaché à une paroi de l'appareil, les éléments de guidage définissant ensemble le passage de conduit depuis l'enceinte jusqu'à l'extérieur de l'appareil lorsque la porte est fermée et donnant accès à l'intérieur du passage de conduit lorsque la porte est ouverte.

Dans une version, les éléments de guidage sont réalisés dans un matériau conducteur de chaleur et sont en contact avec la surface interne de l'enceinte de manière à assurer le maintien en température basse du conduit et du produit alimentaire contenu dans le conduit. De préférence, le matériau conducteur de chaleur a une conductivité thermique supérieure à 5 W/m/K à 10°C, de préférence comprise entre 20 W/m/K et 400 W/m/K à 10°C. De préférence, le matériau conducteur de chaleur est un métal.

Dans une version, les éléments de guidage sont configurés pour recevoir une extrémité inférieure d'un conduit de distribution d'un réservoir de produit alimentaire, lorsque la porte est fermée.

Dans une version, les premier et deuxième éléments de guidage sont configurés pour former une gaine entourant l'extrémité aval lorsque la porte est fermée, la gaine étant de préférence une gaine avec une forme de révolution autour d'un axe de révolution, les premiers et deuxième éléments de guidage formant la gaine étant de préférence symétriques par rapport à un plan contenant l'axe de révolution.

Dans une version, l'unité de soutirage comprend une pompe péristaltique le long du passage de conduit, la pompe étant activable pour distribuer le produit alimentaire sur demande et étant de préférence dans l'enceinte.

L'invention propose en outre un réservoir de produit alimentaire destiné à coopérer avec le bac reçu dans l'enceinte de l'appareil selon l'invention, le réservoir comprenant une poche souple avec à une extrémité des coins pour la suspension du réservoir au bac et avec à une extrémité opposée une interface de sortie de produit de la poche souple.

Dans une version, le réservoir comprend en outre un conduit pour distribuer le produit alimentaire, le conduit comprenant une extrémité amont couplée à l'interface de sortie de produit et une extrémité avale, le conduit est apte à être reçu dans un passage de conduit depuis l'enceinte jusqu'à l'extérieur de l'appareil.

Dans une version, le conduit est de préférence souple, et, le cas échéant,
- l'extrémité avale est apte à être reçue entre des éléments de guidage de l'appareil, et/ou
- le conduit est apte à être reçu dans une pompe péristaltique de l'appareil.

L'invention propose en outre un ensemble comprenant l'appareil selon l'invention et un réservoir selon l'invention, le réservoir étant reçu de manière amovible dans le bac.

L'usage, dans ce document, du verbe « comprendre », de ses variantes, ainsi que ses conjugaisons, ne peut en aucune façon exclure la présence d'éléments autres que ceux mentionnés. L'usage, dans ce document, de l'article indéfini « un », « une », ou de l'article défini « le », « la » ou « l' », pour introduire un élément n'exclut pas la présence d'une pluralité de ces éléments.

Les termes « premier », « deuxième », « troisième », etc. sont, quant à eux, utilisés dans le cadre de ce document exclusivement pour différencier différents éléments, et ce sans impliquer d'ordre entre ces éléments.

L'ensemble des modes de réalisation préférés ainsi que l'ensemble des avantages de l'appareil selon l'invention se transposent *mutatis mutandis* au présent réservoir et ensemble comprenant l'appareil et le réservoir, et inversement. Les différents modes de réalisation peuvent être considérés seuls ou en combinaison.

### Brève description des figures

D'autres caractéristiques et avantages de la présente invention apparaîtront à la lecture de la description détaillée qui suit pour la compréhension de laquelle on se reportera aux figures annexées qui montrent :
- la figure 1, une vue en perspective de l'appareil, porte ouverte ;
- la figure 2, une autre vue schématique de l'appareil, porte ouverte ;
- la figure 3, une autre vue schématique de l'appareil, porte ouverte ;
- la figure 4, une vue schématique de l'appareil, porte fermée ;
- la figure 5, une vue schématique de l'arrière de l'appareil ;
- la figure 6, une vue schématique du dessous de l'appareil ;
- la figure 7, une vue schématique du réservoir ;
- la figure 8, une vue schématique du réservoir dans un bac ;
- la figure 9, une vue schématique d'un détail du bac.

Les dessins des figures ne sont pas à l'échelle. Des éléments semblables sont en général dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation de l'invention

La présent invention se rapporte à un appareil pour conserver et distribuer à la demande un produit alimentaire liquide ou pâteux, en particulier du yaourt. L'appareil comprend une enceinte de stockage de manière amovible d'un réservoir contenant le produit alimentaire et une unité de refroidissement de l'enceinte. L'appareil comprend en outre une unité de soutirage du produit alimentaire et est configuré en ce qu'il comprend en outre une porte de fermeture de l'enceinte. L'appareil permet de réduire les pertes de froid et de respecter la chaîne du froid pour le maintien du produit en conditions réfrigérées. En outre, l'appareil permet de conserver un produit alimentaire tout en permettant de le distribuer à la demande et de manière simple. L'avantage de l'appareil est qu'il est peu encombrant et est simple d'usage.

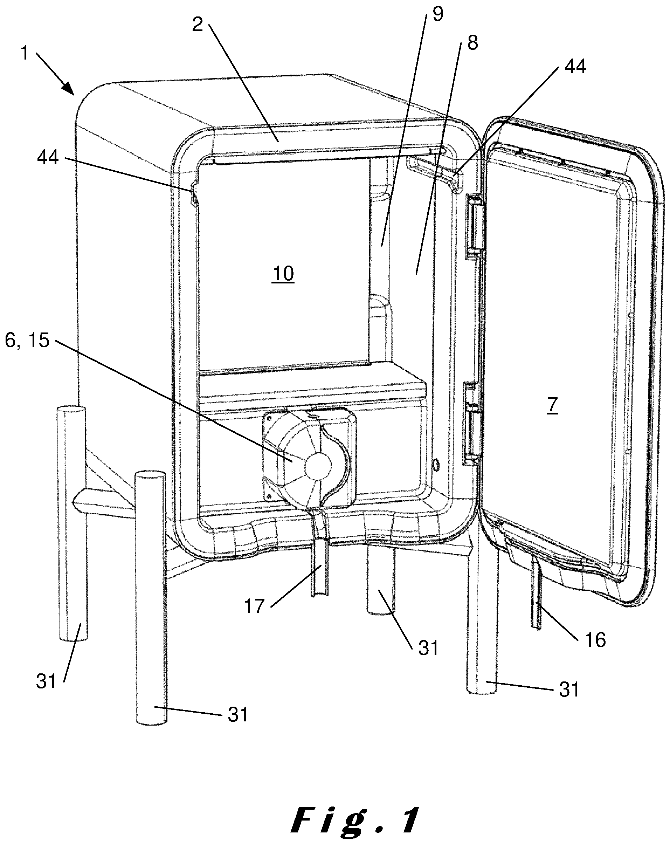

La figure 1 illustre la vue en perspective de l'appareil 1. L'appareil peut être utilisé dans un cadre privé ou bien dans un cadre public. L'appareil 1 étant peu encombrant, il peut être utilisé sur un buffet par exemple. L'appareil 1 comporte une alimentation électrique - non visible sur les figures. L'appareil 1 comporte des parois 2 latérales, supérieure, inférieure et de fond. Sur la partie frontale, l'appareil 1 comporte une porte 7 formant paroi frontale, illustrée en position ouverte sur la figure 1.

L'appareil est destiné à recevoir un produit alimentaire liquide (tel que de l'eau ou une autre boisson, laitière ou non laitière), visqueux ou pâteux. On entend par produit alimentaire visqueux ou pâteux, un produit alimentaire ayant une viscosité importante, par exemple supérieure à 50 mPa.s, de préférence supérieure à 300 mPa.s, et de préférence inférieure à 2000 mPa.s. De préférence, la viscosité du produit alimentaire est inférieure à 1500 mPa.s. Par exemple, la viscosité du produit alimentaire est comprise entre 600 mPa.s et 1500 mPa.s. Dans la présente demande, les viscosités indiquées sont des viscosités mesurées à 10°C, à un cisaillement de 64s-1, après un temps de 10 s à ce cisaillement, à l'aide d'un rhéomètre à deux cylindres coaxiaux, par exemple à l'aide d'un rhéomètre Mettler^{®} RM 180 ou 200.

Alternativement ou en combinaison avec ces valeurs, le produit alimentaire est, de préférence, un produit alimentaire frais, par exemple du lait fermenté, par exemple un yaourt. Le produit alimentaire est plus préférentiellement un lait fermenté brassé, par exemple un yaourt brassé. Ce produit alimentaire peut être, par exemple, en particulier, un yaourt grec (ou « à la grecque »), un skyr ou une alternative végétale au yaourt.

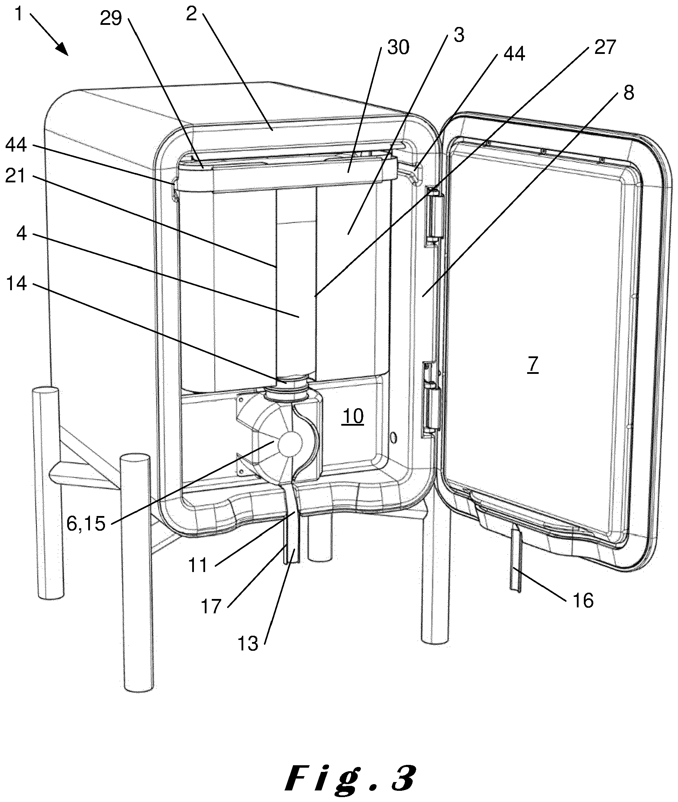

L'appareil 1 comporte une enceinte 10 correspondant à l'intérieur de l'appareil. L'enceinte 10 permet le stockage d'un réservoir 4 (visible sur les figures 3 et 7-8) contenant le produit alimentaire. L'enceinte 10 permet le stockage de manière amovible du réservoir 4. L'enceinte est configurée pour permettre le changement de réservoir 4 lorsque le réservoir 4 est vide. L'enceinte 10 est circonscrite dans la paroi 2 de l'appareil 1. L'enceinte 10 est délimitée par des surfaces internes 8 des parois 2 de l'appareil 1, telles que des surfaces internes latérales, supérieure, inférieure et de fond.

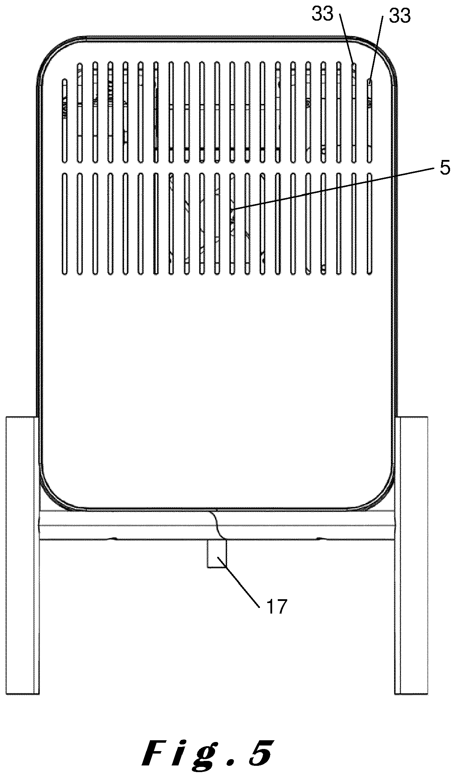

L'appareil 1 comprend également une unité 5 de refroidissement (qui est décrite plus en détail sur la figure 5). L'unité de refroidissement permet de refroidir l'enceinte 10 et donc de conserver le produit stocké dans l'enceinte 10. L'unité de refroidissement 5 est configurée pour réfrigérer le produit alimentaire lorsque le réservoir 4 est dans l'enceinte 10. Le stockage peut par exemple être de quelques heures ou plus, par exemple plusieurs jours ou semaines. L'unité de refroidissement 5 peut être par exemple un système avec un compresseur. De préférence, pour des raisons d'encombrement, l'unité de refroidissement 5 est un dispositif Peltier. Le dispositif comprend des cellules produisant du chaud et du froid lorsque les cellules sont alimentées en courant électrique. Un coté des cellules absorbe les calories et l'autre côté les dissipe. L'avantage d'un tel dispositif est sa compacité, ce qui permet de rendre l'appareil 1 compact - mais aussi robuste. L'unité de refroidissement peut aussi comprendre un ou des ventilateurs pour augmenter les flux thermiques et optimiser la consommation énergétique. Par exemple, un ventilateur extérieur à l'appareil 1 permet de mieux dissiper les calories et/ou un ventilateur intérieur à l'appareil 1 permet de mieux diffuser le froid dans l'enceinte 10 - et donc de mieux refroidir le produit stocké dans l'enceinte 10. Par ailleurs, l'usage de la porte 7 permet, en position fermée, de limiter les pertes de froid, et donc d'améliorer l'efficacité énergétique.

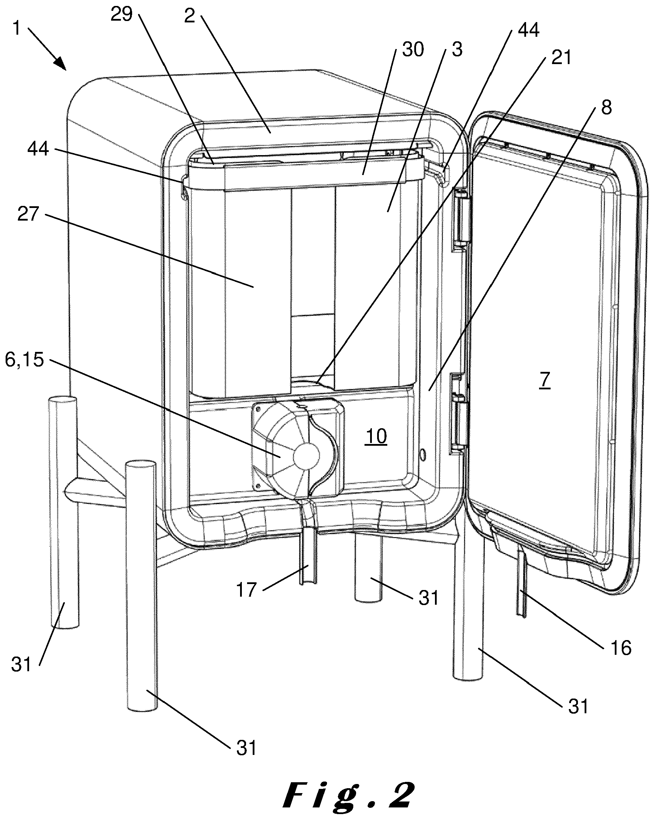

L'appareil 1 comprend aussi une unité de soutirage 6 du produit alimentaire. L'unité de soutirage 6 permet de distribuer à la demande le produit alimentaire, de manière simple. Les figures 1 à 3 montrent un exemple d'unité de soutirage. L'unité de soutirage 6 peut comprendre une pompe 15. La pompe 15 est de préférence de petit volume de sorte à limiter l'encombrement de l'appareil 1. La pompe 15 peut être à l'extérieur de l'enceinte ; de préférence la pompe 15 est dans l'enceinte 10 et n'est pas visible lorsque la porte 7 est en position fermée. La porte 7 en position ouverte permet d'avoir accès à la pompe 15 pour des opérations de maintenance de l'appareil, notamment pour changer le réservoir 4 vide. La pompe 15 peut être une pompe péristaltique. L'avantage d'une pompe péristaltique est son faible encombrement, son faible cisaillement et sa robustesse.

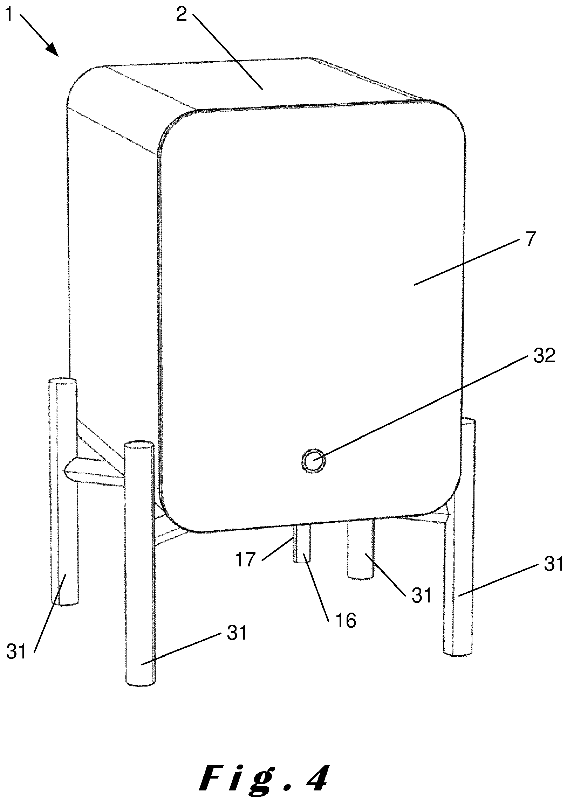

Par ailleurs, la porte 7 de l'appareil peut occuper plusieurs positions, dont au moins une position ouverte comme sur la figure 1 ou une position fermée comme sur la figure 4. La porte permet de masquer l'intérieur de l'appareil 1 (l'enceinte 10) et de conserver l'atmosphère réfrigérée de l'enceinte 10 - ce qui améliore la conservation du produit. Toutefois, la porte 7 permet aussi un accès simple à l'intérieur de l'appareil (l'enceinte 10) pour changer le réservoir 4 vide, pour opérer des actions de maintenance de l'appareil ou pour nettoyer l'appareil 1. En outre, la porte 7 améliore l'hygiène de l'appareil 1, car, en position fermée, le risque de contamination extérieure de l'intérieur de l'appareil 1 - et donc du produit alimentaire - est réduit. La porte 7 peut être montée sur des charnières (tel que cela est le cas sur les figures) mais aussi être amovible. La porte peut aussi coulisser pour passer d'une position à une autre.

L'appareil 1 peut être configuré pour recevoir de manière amovible le réservoir 4 de produit alimentaire, directement au sein de l'enceinte 10. L'enceinte 10 comporte alors des organes de maintien du réservoir 4, par exemple des organes de suspension. De préférence, l'appareil 1 peut comporter un bac 3 pour la réception du réservoir 4 de produit alimentaire. L'enceinte 10 est configurée pour recevoir le bac 3. Le bac 3 est configuré pour recevoir le réservoir 4 de produit alimentaire. Le bac 3 maintient le réservoir 4 dans l'enceinte 10. Le bac 3 assure la réception de manière amovible du réservoir 4. Une fois le réservoir 4 vide, le réservoir 4 est changé par un autre réservoir 4 plein. Le bac 3 peut lui-même être amovible par rapport à l'enceinte 10. Le bac peut translater ou basculer par rapport à l'enceinte 10 de sorte à donner accès au réservoir 4 - par exemple pour le changer. Le bac 3 peut aussi être inséré ou retiré complètement de l'enceinte 10 - ce qui facilite la disposition du réservoir 4 dans le bac 3. Le bac 3 est étroitement ajusté aux surfaces internes 8 délimitant l'enceinte 10. Le jeu entre le bac 3 et les surfaces internes 8 est choisi pour permettre une insertion et un retrait aisée du bac 3. Le jeu est par exemple compris entre 1 mm et 1 cm. Le jeu est aussi choisi pour minimiser le volume de l'enceinte 10 et donc de l'appareil 1, pour limiter l'encombrement de ce dernier.

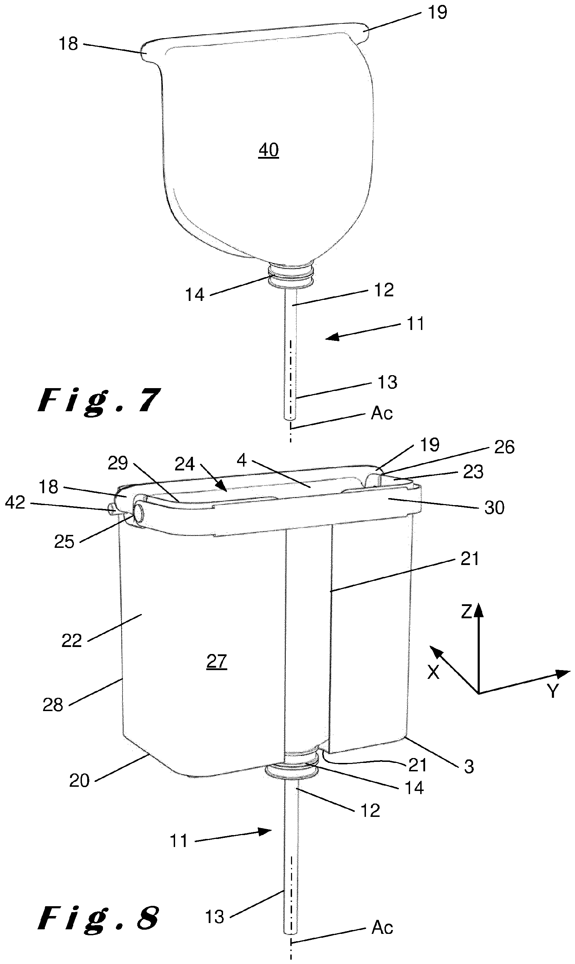

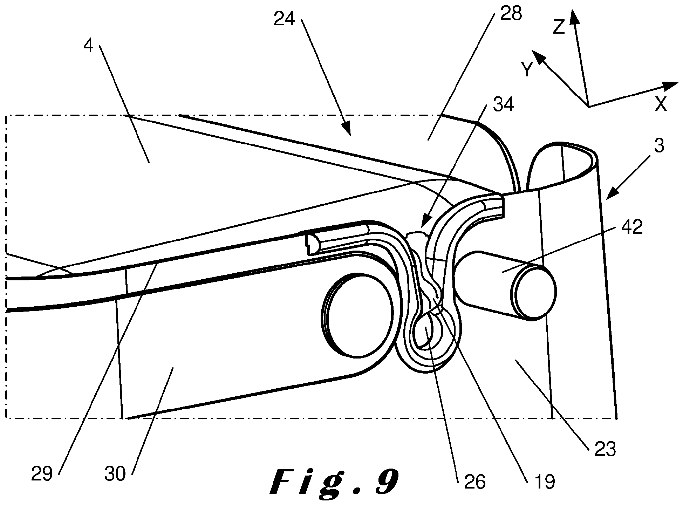

La porte 7 facilite l'accès à l'enceinte 10, et notamment l'accès au bac 3 pour le déplacer comme indiqué précédemment et remplacer le réservoir 4 de produit. Par ailleurs, le bac 3 peut comporter une poignée 30. La poignée 30 facilite la manipulation du bac 3 par rapport à l'enceinte 10 mais aussi à l'extérieur de l'appareil 1, le cas échéant. La poignée 30 peut être fixe ou articulée au bac 3. Par exemple, sur les figures 8 et 9, la poignée 30 est une anse articulée au bac 3.

La figure 7 montre un exemple de réservoir 4 de produit alimentaire. Le réservoir 4 peut être considéré indépendamment de l'appareil 1 ou en combinaison dans l'ensemble comportant l'appareil et le réservoir 4. Le réservoir 4 peut coopérer avec l'appareil 1 pour former l'ensemble comportant l'appareil 1 et le réservoir 4. Le réservoir 4 est configuré pour être monté, reçu dans le bac 3. Le réservoir 4 peut être entièrement ou partiellement contenu dans le bac 3 ; principalement, le bac 3 permet d'insérer et retirer le réservoir 4 de l'enceinte 10 mais aussi de l'y maintenir en position dans l'enceinte 10. Le réservoir 4 est une enveloppe fermée contenant le produit et évite tout contact entre le produit alimentaire et l'air. Le réservoir 4 peut comporter une poche 40 souple contenant le produit alimentaire. A mesure que le produit est distribué, le volume interne de la poche souple diminue. La poche 40 se déforme de sorte à ce que le produit soit le plus possible extrait du réservoir, pour limiter les pertes de produit et donc le gaspillage. Le fait d'être reçu dans le bac 3 permet au réservoir 4 de se déformer tout en restant convenablement en place dans l'enceinte 10. La réservoir 4 peut comporter des coins 18, 19 à une extrémité. Les coins permettent la suspension du réservoir dans l'enceinte 10 et plus spécifiquement la suspension du réservoir au bac 3. A une extrémité opposée, le réservoir 4 peut comporter une interface 14 de sortie de produit de la poche 40. Les extrémités sont par exemple une extrémité haute pour les coins une extrémité basse pour l'interface 14. Le réservoir est configuré de sorte que les coins suspendent verticalement le réservoir 4 pendant l'utilisation de l'appareil de sorte à ce que le produit se rapproche par gravité de l'interface 14. Ceci permet de mettre simplement le produit à disposition.

Selon la figure 7, le réservoir 4 peut aussi comprendre un conduit 11 pour distribuer le produit alimentaire. Le conduit 11 s'étend selon une direction Ac. Le conduit 11 peut comprendre une extrémité amont 12 couplée à l'interface 14 de sortie du produit et une extrémité avale 13 pour la distribution du produit. Le conduit 11 peut être couplé à l'interface 14 par l'extrémité 12 de manière réversible ou non (par soudure ou vissage par exemple). De préférence, le conduit est souple, de sorte à permettre son agencement dans l'appareil 1 pour distribuer le produit alimentaire. Le conduit 11 souple est particulièrement adapté au passage de conduit à travers la pompe 15 de type péristaltique, permettant de pincer et libérer le conduit 11 de sorte à faciliter la distribution du produit alimentaire. Lorsque l'appareil est en cours d'utilisation et que le réservoir 4 est reçu dans le bac 3, lui-même étant reçu dans l'enceinte 10, l'interface 14 de sortie du réservoir est de préférence à une extrémité la plus basse du réservoir 4 selon une direction verticale pour que la gravité favorise un écoulement du produit alimentaire vers l'interface 14 de sortie. L'extrémité avale du conduit 11 est de préférence situé plus bas que l'interface 14 de sortie du réservoir 4, de préférence sous l'enceinte 10 en configuration d'utilisation.

Selon un mode de réalisation - pris isolément ou en combinaison des autres caractéristiques de l'appareil 1, du réservoir 4 de produit alimentaire et de l'ensemble comprenant l'appareil 1 et le réservoir 4 - l'enceinte 10 comporte une surface interne 8 comprenant au moins un canal 9 de circulation d'air refroidi. Le au moins un canal 9 permet la circulation d'un flux d'air au sein de l'enceinte. Un tel flux d'air permet l'aération de l'appareil 1. En particulier, le au moins un canal 9 permet la circulation d'air refroidi depuis l'unité de refroidissement 5. Le froid généré par l'unité de refroidissement 5 est circulé grâce à l'au moins un canal 9. Le canal 9 est configuré pour éloigner de l'unité de refroidissement 5 le flux d'air refroidi par l'unité de refroidissement 5, en particulier lorsque le réservoir 4 de produit alimentaire est reçu dans le bac 3, lui-même reçu dans l'enceinte 10. Le nombre et l'agencement du ou des canaux 9 ne sont pas limitatifs mais déterminés en fonction de l'espace disponible et le niveau de refroidissement du liquide alimentaire souhaité. Il est possible d'envisager un ou plusieurs canaux sur une ou des surfaces internes 8 délimitant l'enceinte 10. Il est envisageable d'avoir un ou des canaux 9 uniquement sur la surface interne 8 de fond, comme donné à titre d'exemple par la figure 1, de sorte à permettre à l'air refroidi de quitter l'environnement de l'unité de refroidissement 5 qui peut être au fond de l'appareil 1. On peut envisager en outre un ou des canaux 9 sur les surfaces internes 8 latérales, de sorte à faciliter la circulation autour du bac 3 et donc autour du réservoir 4 de produit alimentaire. Le ou les canaux 9 peuvent être des tubulures, permettant de diffuser l'air refroidi à leur extrémité ou sur leur long. Le ou les canaux 9 peuvent être des rainures dont la concavité est tournée vers l'enceinte 10. Le cas échéant, le ventilateur intérieur favorise la circulation de l'air refroidi le long du ou des canaux 9. Le jeu entre le bac 3 et les surfaces internes 8 délimitant l'enceinte est plus important au droit de l'au moins un canal 9 que le jeu entre le bac 3 et les surfaces internes 8 dans le reste de l'enceinte. Ceci permet une circulation d'air favorisée au niveau du au moins un canal 9 dans l'enceinte.

Selon un mode de réalisation - pris isolément ou en combinaison des autres caractéristiques de l'appareil 1, du réservoir 4 de produit alimentaire et de l'ensemble comprenant l'appareil 1 et le réservoir 4 - l'appareil 1 comprend un passage pour un conduit de distribution du produit alimentaire, le passage étant depuis l'enceinte 10 jusqu'à l'extérieur de l'appareil 1. Le passage permet au produit contenu dans l'appareil d'être distribué à l'extérieur de l'appareil 1. En particulier, le passage est configuré pour recevoir un conduit de distribution du produit alimentaire, par exemple le conduit 11 du réservoir 4. En d'autres termes, le produit suit un parcours le long du passage depuis le réservoir 4 de produit alimentaire jusqu'à l'extérieur de l'appareil. Le passage permet de positionner correctement le conduit 11 pour le correct acheminement du produit en vue de sa distribution.

Le passage peut comporter plusieurs tronçons. En particulier, selon les figures 1 à 3, l'appareil 1 comprend un élément de guidage 16 attaché à la porte 7 et un autre élément de guidage 17 attaché à une paroi de l'appareil 1 - la paroi inférieure. Les éléments de guidage 16, 17 définissent ensemble le tronçon de passage de conduit depuis l'enceinte 10 jusqu'à l'extérieur de l'appareil 1 - entre l'intérieur et l'extérieur de l'appareil 1, au travers de la paroi de l'appareil 1. Les éléments de guidage 16, 17 sont en saillie à l'extérieur de l'appareil 1. Ainsi, lorsque la porte est fermée, les éléments de guidage 16, 17 sont en saillie à l'extérieur de l'appareil 1 et permettent la distribution du produit depuis l'intérieur de l'appareil vers l'extérieur de l'appareil. Lorsque la porte est ouverte, les éléments de guidage 16, 17 donnent accès à l'intérieur du passage, ce qui qui permet de nettoyer le passage. Plus spécifiquement, les éléments de guidage peuvent être deux demi-coquilles longitudinales formant ensemble une gaine, de préférence une gaine cylindrique droite avec une forme de révolution autour d'un axe de révolution lorsque la porte 7 est fermée et se séparant l'une de l'autre lorsque la porte 7 est ouverte. Les éléments de guidage 16, 17 sont deux demi-coquilles symétriques par rapport à un plan contenant l'axe de révolution. Lorsque les éléments de guidage 16, 17 coopèrent pour former la gaine, la gaine s'étend verticalement afin de favoriser l'écoulement du produit.

De préférence, les éléments de guidage 16, 17 sont réalisés dans un matériau conducteur de chaleur et sont en contact avec la surface interne 8 de l'enceinte 2. Ceci permet avantageusement d'assurer le maintien en température basse du conduit 11 et du produit alimentaire contenu dans le conduit.

Lorsque le réservoir 4 est dans l'appareil 1, le conduit 11 du réservoir est disposé dans le passage de conduit de sorte que le conduit 11 est reçu entre les éléments de guidage 16, 17 lorsque la porte est fermée. Plus spécifiquement, lorsque le bac 3 comportant le réservoir 4 est reçu dans l'enceinte 10, le conduit 11 est agencé de sorte à reposer le long de l'élément de guidage 17 attaché à la paroi inférieure de l'appareil 1. Puis en fermant la porte, l'élément de guidage 16 coopère avec l'élément de guidage 17 de sorte que le conduit 11 soit emprisonné dans la gaine formée par les deux éléments de guidage 16, 17. De préférence l'extrémité avale 13 du conduit 11 est reçu entre les éléments de guidage 16, 17, à l'extérieur de l'appareil 1, lorsque la porte est fermée. Ainsi, on peut maîtriser la position de l'extrémité aval 13 du conduit 11 sans devoir l'enfiler dans un tube de distribution. Les éléments de guidage 16, 17 entourent au moins en partie - de préférence entièrement - le conduit 11 situé à l'extérieur de l'appareil 1, et ne forment pas uniquement le passage permettant au conduit 11 de traverser la paroi inférieure de l'appareil. En outre, lorsque la porte 7 est en position ouverte et que le réservoir 4 est retiré de l'appareil 1, les deux éléments de guidage 16, 17 se séparent l'un de l'autre et il est possible de nettoyer facilement l'intérieur des deux éléments de guidage 16, 17 et donc de nettoyer la gaine formée par la coopération des deux éléments de guidage 16, 17. Ceci favorise l'hygiène de l'appareil, car l'intérieur d'un tube de distribution est difficile à nettoyer. Outre à l'extérieur de l'appareil, le passage de conduit s'étend aussi à travers l'unité de soutirage 6, comme décrit ci-dessus.

Selon un mode de réalisation - pris isolément ou en combinaison des autres caractéristiques de l'appareil 1, du réservoir 4 de produit alimentaire et de l'ensemble comprenant l'appareil 1 et le réservoir 4 - l'appareil 1 comprend des moyens pour maintenir le réservoir en position pour son utilisation. A cet effet, le bac 3 peut comporter une base 20 et des pans latéraux 22, 23 qui s'étendent depuis la base 20. Le bac 3 comprend une ouverture supérieure 24 d'introduction du réservoir 4 de produit alimentaire dans le bac 3. Le bac 3 comprend en outre des encoches 25, 26 dans les pans latéraux 22, 23 autour de l'ouverture supérieure 24. Les encoches peuvent ainsi former les moyens pour maintenir le réservoir dans l'appareil 1. Plus spécifiquement, les encoches 25, 26 permettent le maintien du réservoir dans le bac par pincement. En d'autres termes, une zone dédiée du réservoir est insérée dans les encoches 25, 26 de sorte à maintenir en place le réservoir 4 dans le bac. Par exemple, la zone dédiée correspond aux coins 18, 19 du réservoir. Les coins permettent ainsi la suspension du réservoir au bac 3. En fixant les coins dans les encoches du bac 3 qui sont au niveau de l'ouverture 24 du bac 3 - donc la partie haute du bac 3 - les coins 18, 19 permettent le maintien du réservoir verticalement, avec à l'extrémité opposée l'interface 14 de sortie de produit. Selon la figure 9, les encoches 25, 26 s'étendent depuis le bord supérieur 29 des pans latéraux 22, 23 entourant l'ouverture 24 du bac 3. Les encoches 25, 26 sont donc dans la partie supérieure du bac 3. Les encoches 25, 26 s'étendent depuis le bord supérieur 29 des pans latéraux 22, 23 en direction de la base du bac 3. Les encoches 25, 26 sont évasées en direction du bord supérieur 29 - ou en d'autre termes, se rétrécissent en direction de la base du bac 3. Ceci permet de faciliter l'introduction de la zone dédiée du réservoir pour le maintenir dans le bac - le cas échéant, les coins 18, 19 du réservoir. De préférence, les encoches sont dans les pans latéraux 22, 23 opposés du bac 3, afin de maintenir le réservoir de manière à ce que le produit se propage convenablement vers la sortie. Le pincement du réservoir par les encoches est avantageux dans le sens où la fixation du réservoir 4 au bac 3, et le retrait du réservoir 4 hors du bac 3, sont simples. Il suffit de faire glisser la zone dédiée du réservoir dans les encoches. De plus, cela évite l'endommagement du réservoir et un possible percement du réservoir. Une seule encoche est envisageable, pourvu que le réservoir soit dans une position suspendue dans le bac ; de préférence, deux encoches sont prévues, mais un nombre plus important est aussi possible. Comme cela est visible sur la figure 9, les bords des pans latéraux 22, 23 formant encoches peuvent être revêtus d'un matériau souple accentuant l'effet de pincement tout en protégeant le réservoir - et le cas échéant les coins 18, 19 - contre de possibles endommagements du réservoir.

Selon la figure 8, le bac 3 comprend une fente 21 s'étendant le long d'un pan, depuis le bord supérieur 29 du pan entourant l'ouverture 24 d'introduction du réservoir jusqu'à la base 20, la fente 21 fendant partiellement la base 20. Selon les axes XYZ, l'axe X définissant la profondeur du bac 3, l'axe Y définissant la largeur du bac 3 (X et Y définissant l'horizontale) et l'axe Z définissant la hauteur du bac 3 (Z définissant la verticalité), la fente 21 s'étend le long de l'axe Z sur un pan du bac 3 et se propage dans le plan formé par les axes X, Y. Une telle fente permet de faciliter l'introduction du réservoir 4 dans le bac 3. La fente 21 permet aussi d'opérer l'introduction du réservoir 4 dans le bac de manière rapide. En effet, la fente permet de tenir une extrémité de sortie du réservoir en main - par exemple le conduit 11 ou l'interface 14 - et de la conduire sans discontinuer le long de la fente 21 lors de l'insertion du réservoir dans le bac 3, jusqu'à la base 20 que cette extrémité traverse en position d'utilisation. Par exemple, avec un réservoir 4 tel que montré en figure 7, l'utilisateur peut tenir en main le conduit 11 de sorte que la poche soit dans le bac 3 et l'interface 14 et le conduit 11 en dehors du bac, au travers de la fente 21. Une fois à la base 20, l'interface 14 et le conduit 11 sont glissés sous la base 20 et la poche souple maintenue dans le bac 3. Ainsi, il n'est pas nécessaire de viser une ouverture dans la base 20 depuis le haut du bac 3 afin d'y faire traverser le conduit 11 et l'interface 14 le cas échéant. La fente 21 est de préférence sur le pan avant 27 du bac 3. Ceci permet aussi de facilement repérer le niveau de produit dans le bac 3.

Les figures 8 et 9 montrent aussi un plot 42 s'étendant depuis un pan latéral 22, 23 du bac 3. Le plot 42 peut être glissé dans une glissière 44 ménagée dans une surface interne 8 délimitant l'enceinte - et visible sur les figures 1-3. La coopération du plot 42 et de la glissière 44 permettent de positionner correctement le bac 3 (possiblement muni du réservoir 4) pour l'insertion et le maintien en position du bac 3 dans l'enceinte 10. Il en va de même pour le retrait du bac 3. De façon préférée, le bac 3 comprend un plot 42 sur chacun des pans latéraux 22, 23 opposés et une glissière 44 est ménagée sur chacune de deux surface interne opposées délimitant l'enceinte 10. La coopération de chacun des plots 42 avec un glissière 44 respective améliore encore l'insertion, le maintien du bac 3 dans l'enceinte et le retrait du bac 3 de l'enceinte 10.

La figure 4 montre une vue schématique de l'appareil 1, porte fermée. Un bouton 32 permet l'activation de l'unité de soutirage 6 pour la distribution, à la demande, de produit. Le bouton 32 active par exemple la pompe péristaltique 15.

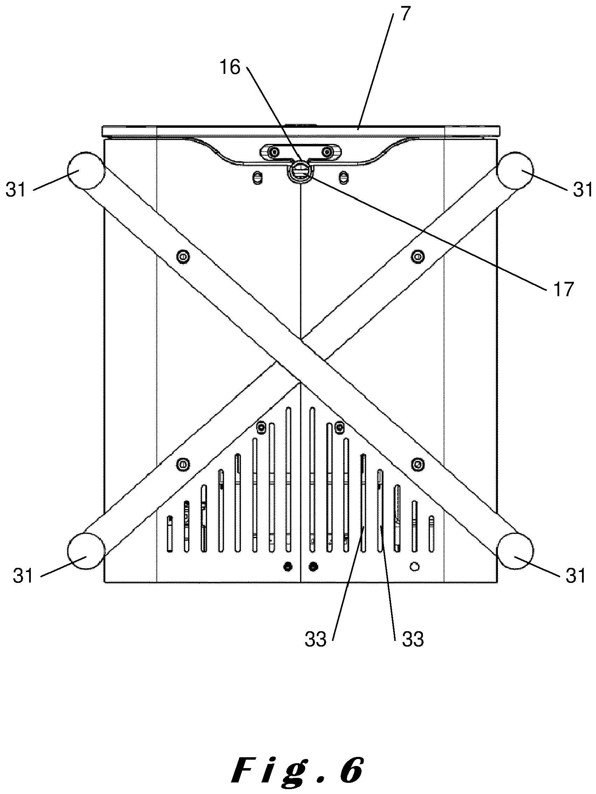

Comme cela est visible sur les figures 1-4, l'appareil 1 peut être monté sur des pieds 31. Ceci permet de maintenir l'appareil en hauteur et ainsi de distribuer du produit dans un récipient posé sous l'appareil 1. Dans l'hypothèse des premier et deuxième éléments de guidage 16, 17, ces derniers forment une gaine pour la distribution de produit sous l'appareil ; les pieds 31 permettent de loger un récipient sous les éléments de guidage 16, 17. L'avantage est qu'il n'est pas nécessaire d'introduire le récipient dans une cavité de l'appareil 1 pour récupérer le produit, ce qui ne limite pas la forme et la taille du récipient. La figure 6 montre une vue schématique du dessous de l'appareil 1. Les pieds 31 sont par exemple un support en forme de X, support possiblement vissé sous l'appareil. L'appareil peut aussi être simplement posé sur le support en X. Sur la figure 6, les éléments de guidage 16, 17 sont visibles, comme débouchant sous l'appareil 1. Également, des lumières 33 sous l'appareil 1 permettent l'évacuation des calories provenant de l'unité de refroidissement 5. Ces lumières 33 peuvent aussi être prévues sur l'arrière de l'appareil 1, comme représentées sur la figure 5 qui montre une vue schématique de l'arrière de l'appareil.

L'invention se rapporte aussi à un ensemble comprenant l'appareil 1 dans lequel le réservoir 4 est reçu. Le réservoir est reçu de manière amovible dans le bac 3. Le cas échéant, les canaux 9 permettent la circulation d'air refroidi depuis l'unité de refroidissement 5. Le cas échéant, l'élément de guidage 16 attaché à la porte 7 et l'élément de guidage 17 attaché à la paroi de l'appareil définissent ensemble le passage de conduit 11 depuis l'enceinte 10 jusqu'à l'extérieur de l'appareil lorsque la porte est fermée et donnant accès à l'intérieur du passage de conduit lorsque la porte est ouverte. Le cas échéant, les encoches 25, 26 dans les pans latéraux autour de l'ouverture supérieure 24 du bac 3 maintiennent le réservoir dans le bac par pincement. Le passage de conduit dans l'appareil s'étend depuis la base du bac 3, au travers de l'unité de soutirage 6 jusqu'à l'extérieur de l'enceinte 10 (via les éléments de guidage 16, 17 le cas échéant) ; le conduit 11 du réservoir 4 peut être reçu le long de ce passage. Les caractéristiques et avantages décrits en lien avec l'appareil 1 et le réservoir 4 s'appliquent *mutadis mutandis* à l'ensemble comprenant l'appareil 1 dans lequel le réservoir 4 est reçu.

Il apparaîtra de façon évidente à l'homme du métier que l'invention n'est pas limitée aux réalisations et aux exemples illustrés et/ou décrits ci-dessus, mais que sa portée est plus largement définie par les revendications ci-après introduites.

## Revendications

1. Appareil (1) pour conserver et distribuer à la demande un produit alimentaire liquide ou pâteux, en particulier du yaourt, comprenant :
• une enceinte (2) de stockage de manière amovible d'un réservoir (4) contenant le produit alimentaire ;
• une unité de refroidissement (5) de l'enceinte (2) ;
• une unité de soutirage (6) du produit alimentaire ;
l'appareil (1) étant configuré en ce qu'il comprend une porte (7) de fermeture de l'enceinte (2).

2. Appareil (1) selon la revendication 1 comprenant un bac (3) amovible pour la réception de manière amovible du réservoir (4), le bac (3) maintenant le réservoir (4) dans l'enceinte (2).

3. Appareil (1) selon la revendication précédente, dans lequel le bac (3) comprend des pans et une ouverture supérieure (24) d'introduction d'un réservoir de produit alimentaire, le bac comprenant en outre des encoches (25, 16) dans les pans latéraux autour de l'ouverture supérieure (24), les encoches maintenant le réservoir dans le bac par pincement.

4. Appareil (1) selon l'une des revendications 2 ou 3, dans lequel le bac comprend une base (20) d'où s'étendent les pans, et une fente (21) s'étendant le long d'un pan, depuis le bord du pan entourant l'ouverture d'introduction d'un réservoir jusqu'à la base, la fente fendant partiellement la base (20), la fente étant de préférence sur un pan avant du bac (3).

5. Appareil (1) selon l'une des revendications précédentes, dans lequel une surface interne (8) délimitant l'enceinte (2) comprend au moins un canal (9) de circulation d'air refroidi depuis l'unité de refroidissement (5), le canal (9) étant agencé le long de la surface interne (8) de l'appareil, le canal (9) étant de préférence un renfoncement dans la surface interne, de préférence une rainure dont une face concave est orientée vers un intérieur (10) de l'enceinte.

6. Appareil (1) selon la revendication 5 lorsqu'elle dépend de l'une des revendications 2 à 4, dans lequel le jeu entre le bac et les surfaces internes (8) délimitant l'enceinte (2) est plus important au droit de l'au moins un canal (9) que le jeu entre le bac et les surfaces internes (8) dans le reste de l'enceinte.

7. Appareil (1) selon l'une quelconque des revendications précédentes, comprenant un passage pour un conduit de distribution du produit alimentaire, le passage étant depuis l'enceinte (2) jusqu'à l'extérieur de l'appareil.

8. Appareil (1) selon la revendication précédente, comprenant un élément de guidage (16) attaché à la porte (7) et un autre élément de guidage (17) attaché à une paroi de l'appareil, les éléments de guidage (16, 17) définissant ensemble le passage de conduit depuis l'enceinte jusqu'à l'extérieur de l'appareil lorsque la porte est fermée et donnant accès à l'intérieur du passage de conduit lorsque la porte est ouverte.

9. Appareil (1) selon la revendication précédente, dans lequel les éléments de guidage (16, 17) sont réalisés dans un matériau conducteur de chaleur et sont en contact avec la surface interne (8) de l'enceinte (2).

10. Appareil (1) selon l'une des deux revendications précédentes, dans lequel les éléments de guidage (16, 17) sont configurés pour recevoir une extrémité inférieure d'un conduit de distribution d'un réservoir de produit alimentaire, lorsque la porte est fermée.

11. Appareil (1) selon l'une des trois revendications précédentes, dans lequel les premier et deuxième éléments de guidage (16, 17) sont configurés pour former une gaine entourant l'extrémité aval (13) lorsque la porte (7) est fermée, la gaine étant de préférence une gaine avec une forme de révolution autour d'un axe de révolution, les premiers et deuxième éléments de guidage (16, 17) formant la gaine étant de préférence symétriques par rapport à un plan contenant l'axe de révolution.

12. Réservoir (4) de produit alimentaire destiné à coopérer avec le bac (3) reçu dans l'enceinte (2) de l'appareil (1) selon la revendication 2 ou selon l'une quelconque des revendications 3 à 11 lorsqu'elle dépend de la revendication 2, le réservoir (4) comprenant une poche souple avec à une extrémité des coins (18, 19) pour la suspension du réservoir au bac (3) et avec à une extrémité opposée une interface (14) de sortie de produit de la poche souple.

13. Réservoir (4) selon la revendication précédente, comprenant en outre un conduit (11) pour distribuer le produit alimentaire, le conduit (11) comprenant une extrémité amont (12) couplée à l'interface (14) de sortie de produit et une extrémité avale (13), le conduit est apte à être reçu dans un passage de conduit depuis l'enceinte (2) jusqu'à l'extérieur de l'appareil.

14. Réservoir (4) selon la revendication précédente, dans lequel, le conduit (11) est de préférence souple, et, le cas échéant,
• l'extrémité avale (13) est apte à être reçue entre des éléments de guidage (16, 17) de l'appareil (1), et/ou
• le conduit (11) est apte à être reçu dans une pompe péristaltique de l'appareil (1).

15. Ensemble comprenant l'appareil (1) selon la revendication 2 ou selon l'une quelconque des revendications 3 à 11 lorsqu'elle dépend de la revendication 2 et un réservoir (4) selon l'une quelconque des revendications 12 à 14, le réservoir (4) étant reçu de manière amovible dans le bac (3).
